# EUROPÄISCHE PATENTSCHRIFT

(11) **EP 0 856 216 B1**
(45) Veröffentlichungstag und Bekanntmachung des Hinweises auf die Patenterteilung: **20.12.2000**
(21) Anmeldenummer: 96938926.1
(22) Anmeldetag: 09.09.1996
(51) Int. Cl.: H04J 14/02, H04B 10/152

(54) **PEGELREGELUNGSVERFAHREN FÜR LICHTWELLENLEITER-ÜBERTRAGUNGSSTRECKE**
LEVEL CONTROL PROCESS FOR OPTICAL FIBRE TRANSMISSION PATHS
PROCEDE DE REGLAGE DE NIVEAU POUR LES SECTIONS DE TRANSMISSION PAR FIBRES OPTIQUES

(30) Priorität: 18.10.1995 DE 19538753
(43) Veröffentlichungstag der Anmeldung: 05.08.1998
(73) Patentinhaber: ROBERT BOSCH GMBH, 70442 Stuttgart (DE)
(72) Erfinder: TISCHER, Friedrich-Christian, D-71522 Backnang (DE); KREMERS, Ernst, D-71540 Murrhardt (DE); KOHN, Ulrich, D-71522 Backnang (DE)
(86) Internationale Anmeldenummer: DE9601687
(87) Internationale Veröffentlichungsnummer: WO9715130

(56) Entgegenhaltungen:
- EP-A- 0 297 504
- PATENT ABSTRACTS OF JAPAN vol. 016, no. 432 (E-1262), 9.September 1992 & JP 04 150324 A (NEC CORP), 22.Mai 1992,
- PATENT ABSTRACTS OF JAPAN vol. 017, no. 703 (P-1666), 22.Dezember 1993 & JP 05 241209 A (FUJITSU LTD), 21.September 1993,
- PATENT ABSTRACTS OF JAPAN vol. 016, no. 237 (P-1362), 29.Mai 1992 & JP 04 050926 A (SHIMADZU CORP), 19.Februar 1992,
- PATENT ABSTRACTS OF JAPAN vol. 018, no. 318 (E-1562), 16.Juni 1994 & JP 06 069890 A (NIPPON TELEGR & TELEPH CORP), 11.März 1994,

## Beschreibung

### Stand der Technik

Die Erfindung geht aus von der Gattung, wie im unabhängigen Anspruch 1 angegeben. Die optische Nachrichtentechnik gewinnt wegen ihrer unbestreitbaren Vorteile für die Übertragungstechnik hinsichtlich Dämpfung und Bandbreite laufend an Bedeutung. Daher werden für die Zukunft rein optische Netze geplant mit als Schalter wirkenden Netzknoten (Crossconnects) und Übertragungssysteme mit optischen, weitgehend transparenten Eingängen wie z.B. Wellenlängenmultiplexsysteme, die eine Vielzahl von hinsichtlich Frequenz, Bitrate, Übertragungsformat u.a. unterschiedlichen, optischen Nachrichtensignalen übertragen können. Konzepte dieser Art werden u.a. unter dem Stichwort "all-optical network" weltweit diskutiert.

Ein Problem in Netzabschnitten solcher Netzwerke ist, daß die ankommenden, zu übertragenden optischen Signale in der Regel je nach Vorgeschichte und Toleranzen von Geräten deutlich unterschiedliche Pegel der Größenordnung 10 dB oder mehr haben, die die weitere Übertragung mit genügender Qualität erschweren bzw. im Extremfalle sogar unmöglich machen. In vielen Fällen ist es nicht zumutbar, bzw. insbesondere in schaltenden Einrichtungen ist es nicht ausreichend, einen einmaligen Ausgleich dieser Pegelunterschiede durch manuelle Einstellung, z.B. mittels einstellbarer Dämpfungsglieder, vorzunehmen, da die angeschalteten Einrichtungen und damit die zu verarbeitenden optischen Pegel sich automatisch gesteuert dauernd ändern.

In PATENT ABSTRACTS OF JAPAN, Vol. 16. No. 432 (E-1262) 09.09.1992 ist ein Pegelregelungsverfahren mit einem automatisch wirkenden, optischen Pegelsteller für eine Lichtwellenleiterübertragungsstrecke angegeben, auf welcher sich der Pegel optischer Signale ändert. Der Pegelsteller dient dabei als steuerbares, optisches Dämpfungsglied.

In EP-A-297 504 sind optische Sender für ein WellenlängenMultiplexsystem offenbart. Dabei ist zwischen dem optischen Modulator eines Senders und einem Multiplexer ein optischer Limiter vorgesehen, der in einem Regelkreis mit Photodiode einen Lichtintensitätsmodulator als Stellglied aufweist.

### Vorteile der Erfindung

Der Anmeldungsgegenstand mit den Merkmalen des Anspruchs 1 hat folgenden Vorteil: Durch das Pegelregelungsverfahren für eine Lichtwellenleiter-Übertragungsstrecke mit Pegelsteller nach der Erfindung ist es möglich, erträgliche Pegeltoleranzen für die Verarbeitung der übertragenen optischen Signale innerhalb von Signalverarbeitungseinrichtungen einzuhalten, die in ein Vielkanal-, insbesondere Wellenlängenmultiplexsystem eingeschaltet sind. Dabei werden auftretende, störende Pegelunterschiede dadurch eliminiert oder zumindest stark reduziert, daß für die bezeichneten Anwendungen in optischen Netzabschnitten an geeigneten Stellen der Übertragungsstrecke automatisch wirkende Pegelregelungen mit optischen Pegelstellern gemäß der Erfindung vorgesehen sind. Solche in der optischen Ebene wirkende Pegelsteller sollen dadurch realisiert werden, daß an sich bekannte optische Schalter (die auch als digitale Modulatoren bezeichnet und betrieben werden können) durch entsprechende Ansteuerung in einem Regelkreis als analog wirkende Pegelsteller verwendet werden. Insbesondere können hierfür in besonders vorteilhafter Ausgestaltung an sich bekannte, auf Kunststoffbasis, z.B. Polymerbasis, arbeitende, integrierbare optische Anordnungen verwendet werden. Solche Pegelsteller können besonders elegant realisiert werden, wenn an sich bekannte optische Monitor-Fotodioden, die in der Regel zur Überwachung des Vorhandenseins oder Nichtvorhandenseins eines optischen Signals auf der Übertragungsstrecke ohnehin erforderlich sind, mit der als Pegelsteller benutzten optischen Anordnung zusammengebaut werden; hierdurch ergeben sich besonders kleine, integrierbare Lösungen. Die Pegelregelung wird insbesondere dann eingesetzt, wenn z. B. ein gemeinsamer optischer Verstärker in einem Wellenlängenmultiplexsystem von mehreren optischen Signalen aus unterschiedlichen Quellen mit unterschiedlichen, sich gegebenenfalls bei Umschaltungen ändernden Pegeln gespeist wird.

### Zeichnung

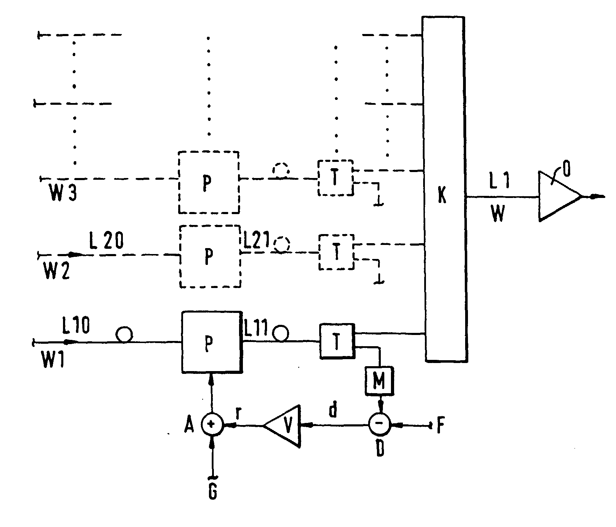

Ein Ausführungsbeispiel der Anwendung der Erfindung ist in der Figur gezeigt und in der nachfolgenden Beschreibung näher erläutert. Die Figur zeigt zu einem Vielkanalsystem zusammengeführte Lichtwellenleiter-Übertragungsstrecken mit jeweils einem optischen Pegelsteller.

### Beschreibung des Ausführungsbeispiels

An den Eingängen der Anordnung kommen auf Lichtwellenleitern L10, L20, .... Signale der Wellenlänge W1, W2, .... eines Vielkanalsystems an. Sie werden über einen Koppler K zusammengefaßt, so daß in einem Lichtwellenleiter L1 Wellenlängenmultiplexsignale W eines Vielkanalsystems vorliegen. Die Signale der verschiedenen Wellenlängen haben unterschiedliche Pegel, weil sie in unterschiedlicher Weise Dämpfungen in den zuvor durchlaufenen Teilen eines Übertragungsnetzes erfahren haben, z.B. durch unterschiedliche Dämpfungen oder unterschiedliche Anzahl von Lichtwellenleiter-Steckern, unterschiedliche Kabellängen, oder schlicht deswegen, weil sie aus unterschiedlichen Lichtquellen mit unterschiedlichen Ausgangspegeln stammen.

In einem Vielkanalsystem aber sollten die Signale der einzelnen Kanäle (Wellenlängen) untereinander gleiche Pegel haben, insbesondere, wenn sie in einem optischen Verstärker O (am Ausgang der Anordnung nach der Figur) gemeinsam verstärkt werden.

Deshalb ist in jeder Übertragungsstrecke für die Signale der Wellenlängen W1, W2, .... ein optischer Pegelsteller P jeweils zwischen dem ankommenden Lichtwellenleiter L10, L20, .... und einem weiterführenden Lichtwellenleiter L11, L21, .... vorgesehen. Ein solcher Pegelsteller P ist nach dem Prinzip eines Interferometers aufgebaut und besteht dann im wesentlichen aus zwei Lichtwellenleiterzweigen, von denen die wirksame optische Länge des einen veränderbar ist.

In Übertragungsrichtung hinter den Lichtwellenleitern L11, L21, .... befindet sich jeweils ein Strahlteiler T, dem über den Koppler K und einen Lichtwellenleiter L1 der optische Verstärker O nachgeschaltet ist.

Ein zweiter Teilausgang eines jeden Strahlteilers T führt zu jeweils einer Monitor-Fotodiode M, deren elektrisches Ausgangssignal auf einen Eingang eines Komparators D geschaltet ist, dessen anderem Eingang eine Führungsgröße F zugeleitet wird. Nach Differenzbildung gelangt ein Differenzsignal d des Komparators D zu einem elektrischen Verstärker V, dessen Ausgangssignal als Regelsignal r an einen Eingang eines Additionsgliedes A geführt ist. Hier wird es zu einem elektrischen Vorstrom G addiert, so daß ein Summenstrom vom Additionsglied A als Stellgröße H in den Pegelsteller P fließt.

Mit der beschriebenen Anordnung gelingt es, die Signale der Wellenlängen W1, W2, W3, .... auf Pegel herabzudämpfen, welche die etwaigen bereits an den Eingängen W1, W2, W3, ... bestehenden Pegelabweichungen ausgleichen und der Frequenzcharakteristik (Verstärkungsfaktor in Abhängigkeit von der optischen Wellenlänge) eines nachgeschalteten Gerätes (z. B. optischer Verstärker O) angepaßt sind. Denn durch die Regelschleifen M-D-V-A-P ist es möglich, die Pegel am Eingang des Kopplers K selbsttätig zu regeln, indem in den Komparatoren D Abweichungen der Pegel von den Führungsgrößen F festgestellt und dazu genutzt werden, die Dämpfungswerte der Pegelsteller P so zu beeinflussen, daß in den Lichtwellenleitern L11, L21, .... diejenigen Pegel der Signale der Wellenlängen W1, W2, .... erhalten bleiben, die durch die Führungsgrößen F vorgegeben sind.

Als Pegelsteller können gemäß der Erfindung optische Schalter dienen, sofern sie aufgrund ihrer Ausgestaltung dazu geeignet sind, Zwischenstellungen zwischen Schaltstellungen auf Dauer einzunehmen.

Statt des Signales einer Wellenlänge W1 oder W2 u.s.w. können auch Signale mehrerer Wellenlängen in jeweils einen Lichtwellenleiter L10 bzw. L20 u.s.w. eingespeist werden, wenn aufgrund der Vorgeschichte der jeweiligen Signale feststeht, daß sie ungefähr denselben Pegel haben.

Der optische Verstärker O kann ein Faserverstärker sein. An seine Stelle können aber auch andere optische Signalverarbeitungseinrichtungen treten.

Mindestens ein Pegelsteller P mit Lichtwellenleiter, Strahlteiler, Monitor-Fotodiode und eventuell sogar der Koppler K können auf einem einzigen Träger, der z. B. in Kunststoff ausgeführt ist, integriert sein.

## Patentansprüche

1. Pegelregelungsverfahren für eine Lichtwellenleiter-Übertragungsstrecke, auf welcher sich der Pegel optischer Signale ändert, mit einem automatisch wirkenden, optischen Pegelsteller (P) in einem Regelkreis, wobei der Pegelsteller in dem Bereich zwei Schaltstellungen als steuerbares, optisches Dämpfungsglied betrieben wird
dadurch gekennzeichnet,
daß der optische Pegelsteller (P) nach dem Prinzip des Schaltgliedes eines optischen Schalters oder eines digitalen optischen Modulators arbeitet, die geeignet sind, Zwischenstellungen zwischen Schaltstellungen auf Dauer einzunehmen, und
daß der Pegelsteller (P) nach dem Prinzip eines Interferometers aufgebaut ist, bei dem einer der optischen Wege in seiner wirksamen optischen Länge steuerbar ist.

2. Pegelregelungsverfahren nach Anspruch 1,
dadurch gekennzeichnet, daß der Pegelsteller (P) als integriertes, optisches Schaltglied ausgebildet ist.

3. Pegelregelungsverfahren nach einem der vorherigen Ansprüche, dadurch gekennzeichnet, daß zur Steuerung des optischen Pegelstellers (P) Ausgangssignale einer Monitor-Fotodiode (M) herangezogen sind, die zur Überwachung des Pegels auf der Übertragungsstrecke dient.

4. Pegelregelungsverfahren nach einem der vorherigen Ansprüche, dadurch gekennzeichnet, daß die Monitor-Fotodiode (M) gemeinsam mit dem Schaltglied integriert ist.

## Claims

1. Level control method for an optical conductor transmission link on which the level of optical signals changes, having an automatically acting, optical level controller (P) in a control loop, the level controller being operated in the region of two switching positions as a controllable, optical attenuator, characterized in that the optical level controller (P) operates according to the principle of the switching device of an optical switch or of a digital optical modulator which are suitable for permanently assuming intermediate positions between switching positions, and in that the level controller (P) is designed according to the principle of an interferometer in which the effective optical length of one of the optical paths can be controlled.

2. Level control method according to Claim 1, characterized in that the level controller (P) is constructed as an integrated optical switching device.

3. Level control method according to one of the preceding claims, characterized in that use is made, for the purpose of controlling the optical level controller (P), of output signals of a monitor photodiode (M) which serves to monitor the level on the transmission link.

4. Level control method according to one of the preceding claims, characterized in that the monitor photodiode (M) is integrated jointly with the switching device.

## Revendications

1. Procédé de régulation de niveau pour un chemin de transmission par guide de lumière, chemin suivant lequel le niveau des signaux optiques change, comprenant un organe de réglage de niveau optique (P), à action automatique dans un circuit de régulation, cet organe de réglage de niveau fonctionnant dans la zone de deux points de commutation comme élément d'amortissement optique commandé,
caractérisé en ce que
l'organe de réglage optique de niveau (P) fonctionne selon le principe de l'organe de commutation d'un commutateur optique ou d'un modulateur optique numérique pouvant prendre à terme des positions intermédiaires entre les positions de commutation et
l'organe de réglage de niveau (B) est construit suivant le principe d'un interféromètre dont l'un des chemins optiques a une longueur optique active susceptible d'être commandée.

2. Procédé de réglage de niveau selon la revendication 1,
caractérisé en ce que
l'organe de réglage de niveau (P) est un élément de commutation optique intégré.

3. Procédé de réglage de niveau selon l'une quelconque des revendications précédentes,
caractérisé en ce que
pour commander l'organe de réglage de niveau optique (P) on utilise les signaux de sortie d'une photodiode de contrôle (M) servant à surveiller le niveau sur le chemin de transmission.

4. Procédé selon l'une quelconque des revendications précédentes,
caractérisé en ce que
la photodiode de contrôle (M) est intégrée en commun avec l'élément de commutation.
